# EUROPEAN PATENT APPLICATION

(11) **EP 1 433 394 A1**
(43) Date of publication of application: **30.06.2004**
(21) Application number: 03104708.7
(22) Date of filing: 16.12.2003
(51) Int. Cl.: A41D 31/00, A62D 5/00

(54) **Air permeable garment and fabric with integral aerosol filtration**

(30) Priority: 17.12.2002 US 322362
(71) Applicant: DONALDSON COMPANY, INC., Minneapolis, MN 55440-1299 (US)
(72) Inventor: Gogins, Mark A., 55113, Roseville (US); Grafe, Timonthy H., 55416, Edina (US); Carr, Mark E., 18947, Pipersville (US)
(74) Representative: Eisenführ, Speiser & Partner

(57) **Abstract**

An air permeable multilayer fabric (400) for protection from aerosols comprising a bilayer structure comprising a PTFE membrane (410) secured to an outer shell (412), the PTFE membrane (410) acting as an aerosol filter, and an optional interior fabric layer (416) having a reactive layer (420) for the removal of harmful gas phase agents.

## Description

### Field of the Invention

An air permeable fabric having an integral aerosol filtration barrier can be used in a variety of protective garments, surgical drapes, patient gowns and other structures. The structures act to prevent the passage of aerosols through the fabric, or for the equalization of the pressure across the barrier fabric, for the comfort of the wearer or the protection of others. The aerosols could include harmful agents such as chemical agents, biological agents, toxic industrial agents, for example, asbestos or lead, or naturally occurring aerosols, nuisance dust or radioactive particles. While the garment is a barrier to harmful agents, the fabric possesses air permeability for comfort of the wearer. The fabric and garments thereof are well suited for military applications including protection from chemical and biological warfare agents and radioactive particles.

### Background of the Invention

Henn et al., U.S. Patent No. 5,026,591; Gore et al., U.S. Patent No. 4,194,041; Gohlke, U.S. Patent No. 4,344,999; Worden et al., U.S. Patent No. 4,443,511; Gore, U.S. Patent No. 3,953,566; Tomoda et al., U.S. Patent No. 4,133,927; Nomi, U.S. Patent No. 4,692,369; Sato et al., U.S. Patent No. 4,539,255; Henn, U.S. Patent No. 4,532,316; and Maples, U.S. Patent No. 6,395,383.

As shown by the preceding patent disclosures, in large part, most barrier fabrics are made by either coating or filling a stretched film or membrane often called a "scaffold" material comprising a PTFE material. The PTFE material is then filled, partly filled, or coated with a filling material, which preferably seals off or blocks a substantial portion of the pores in the scaffold. The filling material is typically a resin, such as a polyurethane resin, that may have a relatively high moisture vapor transmission rate. Alternately, the filling material may be a special chemistry that allows diffusion on water vapor but prevents diffusion of other gases such as chemical warfare and industrial toxic agents. These barrier fabrics are sometimes called "semi-permeable" because they are permeable to certain gases via diffusion, but impermeable to other gases and impermeable to bulk flow of air through the garment.

Other barrier fabrics function by what is generally referred to as an "impermeable" material. A suitable material of this type, such as butyl rubber, will exhibit low transmission of most gases, including water vapor. These materials are often referred to as non-breathable.

When used in the construction of protective clothing, both impermeable and semi-permeable fabrics limit the flow of bulk air through the fabric. The semi-permeable varieties in general allow for the diffusion of water vapor, making them somewhat more comfortable for the wearer, by allowing water vapor from evaporated sweat to diffuse through the filling material. When used in protective clothing, both impermeable and semi-permeable materials can retard the transfer of heat from the human body to the ambient environment. However, without significant transfer of heat from the body, the wearer may experience significant discomfort, and eventually be subject to heat stroke and even death.

Jones et al., U.S. Patent No. 4,932,078, discloses garment fabrics comprising a PTFE material laminated to permeable backing material. The disclosed garment fabrics prevent the flow of particulate matter and allow the passage of water vapor or air, but includes PTFE material with small pores less than 0.2 microns which results in poor air permeability characteristics. This reference also discloses using higher air permeability materials in breathable masks. These materials are designed for filtering inhaled or exhausted air, but not for use in bulk garment or fabric applications.

Blucher et al., U.S. Patent No. 4,510,193 and Smolik et al., U.S. Patent No. 5,662,991, disclose the use of adsorption/absorption materials with fabrics to eliminate gaseous and biocidal agents, but these references fail to disclose using this fabric system with a means for eliminating aerosols. Smolik et al. also discloses using hydrophilic resin coated PTFE membranes that do not provide air permeability.

### Brief Discussion of the Invention

We have found that a fabric can act as a barrier to the transport of hazards. The fabric can be used as protective suits or clothing or other barrier uses such as containers of hazardous materials. We have found a multilayer fabric that can provide comfort through air permeability and protection from gas phase agents and protection from aerosol penetration. The resulting fabric provides substantial protection from the penetration of aerosol particulates and chemical and biological warfare agents through the fabric while maintaining substantial permeability and comfort for the wearer over an extended period of use. The structure typically comprises a PTFE membrane that is substantially free of any agent that fills the pores created by stretching the PTFE into a stretched porous fabric. The hydrophobic PTFE layer, having small pore sizes, can act as a barrier to aerosols, or, using its hydrophobic nature, repel liquid agents. The structure comprises an outer shell fabric that may be adhered to the PTFE membrane. Some fabrics comprise an interior or inner comfort layer. The inner comfort layer provides a surface that is comfortable to skin contact and protects the other layers, particularly, the PTFE layer for contamination and plugging from skin oils and skin debris. The oils and skin debris can film over and plug the pore structure in the PTFE layer. The interior comfort layer may include a reactive layer to filter out harmful gas agents. This unique structure separates the reactive layer from the PTFE layer and isolates the PTFE layer from contact with the wearer's skin surface. The fabric of the invention can be used in any aspect of clothing including a suit that can entirely or substantially cover an individual or any body part thereof. The fabric can be used in shirts pants or slacks, jackets or coats, etc. The fabric can be used in underwear, socks or stockings, hats, gloves, leggings, chaps, spats, etc.

Two basic options for the multilayer fabrics are: (1) a fabric for aerosol filtration only; and (2) adding a layer for filtration or neutralization of gas-phase agents to the aerosol filtration fabric. As an example, an aerosol protective fabric might be used for asbestos abatement where there are no chemical threats present, while the fabric may be further combined with an additional layer for mitigation of gas-phase chemicals combined with aerosols (e.g., a chemical/biological warfare situation.)

### Brief Discussion of the Drawings

FIGURE 1 is a schematic diagram of one embodiment of a multilayer fabric;
FIGURE 2 is a schematic diagram of a second embodiment of a multilayer fabric;
FIGURE 3 is a schematic diagram of a third embodiment of a multilayer fabric; and
FIGURE 4 is a schematic diagram of a fourth embodiment of a multilayer fabric.

### Detailed Discussion of the Invention

The invention resides in a fabric or in an article sewn from the fabric such as a garment. The fabric is a multilayer structure having substantial wearer comfort, but protects the wearer from the introduction of a harmful agent such as gaseous and/or aerosol hazardous substances. More particularly, the multilayer fabric has a substantial air permeability, but acts as a substantial barrier to the penetration of aerosol and gaseous biological and chemical warfare agents through the fabric. The fabric can be incorporated into a variety of wearable items including hats, hoods, drapes, jackets, girdles, shorts, pants, socks, boots, underwear, outerwear, overcoats, raincoats, full body suits and other such garments. The fabric of this invention also have a numerous non-garment applications, such as tents, canopies, backpacks, storage bags, tarps, and body bags, etc.

The multilayer fabric typically comprises an expanded polytetrafluoroethylene (PTFE) layer having defined air permeability due to the presence of pores having a defined pore size in the expanded PTFE layer or membrane. Such a layer has a pore size sufficiently small to act as a barrier to the introduction of aerosol materials through the barrier layer, but has sufficiently large pore sizes to provide sufficient air permeability for comfort.

The multilayer fabric typically includes an outer shell, either a woven or non-woven material that can act to protect the PTFE layer from damage, contamination or wear. Often the outer shell is combined with the PTFE layer using a variety of manufacturing techniques; however, such a combination is preferably manufactured using adhesive lamination technology. In other multilayer constructions, the PTFE layer might be layered next to shell material, and not laminated. For example, the PTFE layer might be sewn together with the shell.

The multilayer fabric of the invention can include an inner fabric layer. The inner fabric layer can be comfortable to wear for a user. Such a material is either a woven or non-woven fabric (which includes knitted materials) and is typically selected for its wearer comfort, utility and manufacturing the overall multilayer structure and permeability. Such fabric layers act to provide comfort to the wearer and to protect the multilayer structure from damage, contamination or wear. The PTFE layer may be positioned next to, sewn to, or adhered to, any of the various fabric layers in the multilayer fabric.

The fabric can further comprise a reactive layer that includes an absorbent or adsorbent material that is active in absorbing, adsorbing and/or deactivating gaseous chemical or biological warfare agents from the ambient atmosphere as it penetrates the fabric. A variety of active chemical treatment materials and active and/or passive adsorbents or absorbents can be present in such layer.

Such multilayer fabrics have the following preferred properties: (1) increased aerosol protection; (2) adequate air permeability; and (3) optional absorbent, adsorbent, and/or biocidal filtration capability.

### PTFE Membrane

Expanded PTFE materials are produced using processes that provide an expanded layer made of nodes of interconnecting fibrils, typically considered to be related to membrane formation. The preferred fluorinated thermoplastic is polytetrafluoroethylene, however, other fluorinated materials can be used such as fluorinated ethylene propylene (FEP) and other fluorinated thermoplastic materials. Such materials include copolymers of tetrafluoroethylene, polychlorotrifluoroethylene and other fluorinated materials.

The porous membrane of expanded PTFE used in a fabric can be an expanded, porous PTFE membrane that can satisfy the requirements of being waterproof while also being permeable to the flow of gases such as air and water vapor. Expanded porous PTFE membranes are inherently hydrophobic and contain pores that resist the entry of liquid water even at substantial pressures or when rubbed or flexed, but readily allow the flow of gases. Unlike conventional PTFE membrane fabric materials with sealed or closed pores that transport water through diffusion and are impermeable to bulk airflow, the permeability of the present invention is achieved by gaseous flow of air and water vapor through the membrane to the outside.

In addition to the waterproofness and air permeability of protective articles, it is desirable for such articles to have the distinguishing characteristic of stretch. Stretch offers to the consumer many advantages such as comfort, fit, reduced pucker, improved wrinkle resistance, the need for fewer sizes, alterations and greater design flexibility. In its broad concept, "stretch" might be defined as the comfort factor in textile products. In specific textile applications, the technology of stretch relates to fibers, yams and fabrics; and the extent of its presence in textile products is a matter of its functional advantage for a particular end use.

The multilayer fabric of the invention includes an expanded PTFE layer or membrane forming an aerosol barrier. The PTFE membrane has a defined air permeability of about 0.5 fpm (cubic feet per minute) to about 300 fpm, preferably about 10 fpm to about 100 fpm. Air permeability is measured according to ASTM D737-96. The PTFE membrane has a defined pore size that is typically greater than about 0.2 microns and preferably greater than about 1 micron. The pore size of the PTFE membrane is measured according to ASTM F316-86. The PTFE membrane has a filtration efficiency (LEFS) greater than 50%, preferably greater than about 80%. The PTFE membrane has a filtration efficiency (LEFS) that can range from about 50% to about 99.9999, preferably about 80% to about 99.99%. Air filtration efficiency is measured according to ASTM F1215-89 using 0.8 micron polystyrene latex spheres at an air velocity of 20 feet per minute.

### Outer Shell

Typically, the outer shell is a light fabric having a weight of about 0.5 oz/ sq yd. to about 20 oz / sq. yd., preferably about 1 to about 10 oz/sq. yd. Both woven and non-woven fabrics can be used, however, a preferred fabric is a light woven fabric. For example, the outer shell can be, for example, cotton, nylon, polyester, polyethylene, polypropylene, acrylic fibers, PVC fibers, and blends of such materials, or any other fabric or blend of fabrics. Such fibers can be woven into a fabric and can have a patterned or dyed appearance.

Typically, the outer shell has a defined air permeability of about 2 fpm to about 100 fpm, preferably about 5 fpm to about 20 fpm.

The air permeability of the outer shell can determine the rate of flow of air exchange through the garment, which in embodiments using a reactive layer (described below) may be necessary to maximize the filtering capability of the agent used in the reactive layer. The shell may provide other functionality, such as a exhibiting a camouflage pattern, a bright color, and may provide protection to the wearer from sharp objects, debris and soil. The shell fabric may be treated with fluorocarbon or other protective treatments such as Quarpel, Scotchgard or other materials to improve the resistance of the fabric to liquid splashes and dirt.

Preferred fabrics for use in this invention are light nylon/cotton-blended fabrics that are available from H.L. Landau Company, located in Bala-Cynwyd, Pennsylvania. One example of an outer shell is a camouflage dyed nylon/cotton-blended, wind-resistant poplin having a weight of about 7 oz/sq yd. This outer shell is described in MIL-C-44436(GL).

### Multilayer PTFE Membrane/Outer Shell

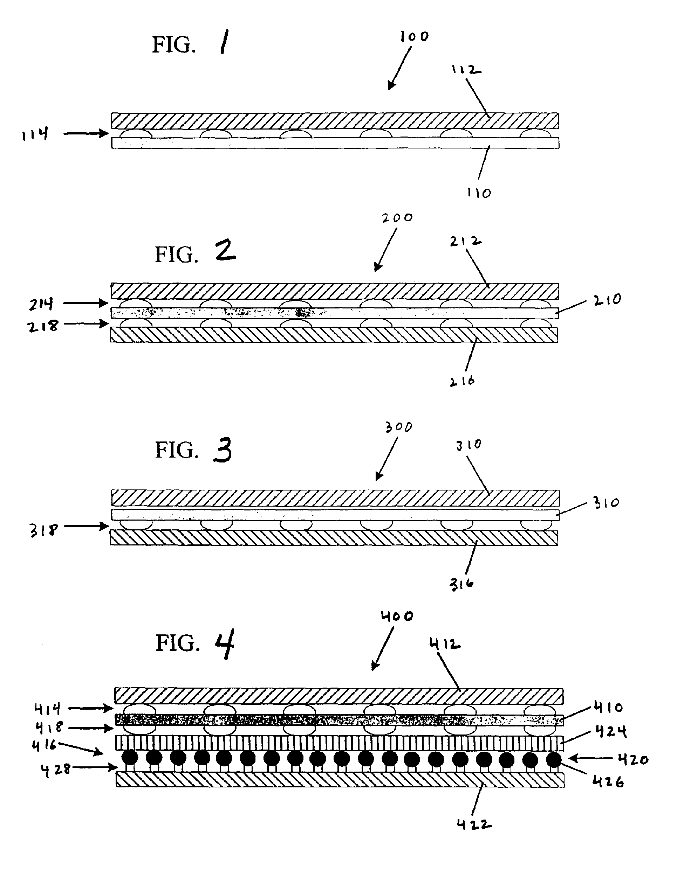

Referring to Figure 1, a multilayer fabric 100 is shown. The multilayer fabric includes a PTFE membrane 110 adhered to an outer shell 112 with a discontinuous adhesive 114. Discontinuous adhesive 114 typically covers about 10 to about 50%, and preferably about 30 to about 45%, of the surface area of the PTFE membrane 110. Discontinuous adhesive does not seal the PTFE membrane 110 with adhesive, allowing for air permeabilities between about 0.25 to about 150. Preferably, air permeabilities range from about 2 to about 50. With this multilayer fabric construction, the pores of the PTFE membrane 110 are substantially free from any adhesive or other composition such as hydrophilic polyurethane materials. The PTFE membrane 110 is adhered to the outer shell 112 and not laminated with a continuous layer of adhesive that would lower air permeabilities to about zero.

Alternative means of achieving adherence of the layers may be used, such as use of use of an adhesive web or thermal lamination. In other constructions, the discontinuous adhesive can be eliminated and the PTFE membrane and outer shell can be positioned next to one another as separate layers without any method of attachment, adherence, lamination, or connection. In another embodiment, the PTFE membrane and outer shell can be sewn together as an alternative to the adherence method of connection of the individual layers.

Multilayer fabrics that include an outer shell adhered to a PTFE membrane can have has a defined air permeability of about 0.25 fpm to about 100 fpm, preferably about 2 to about 50 fpm, and a filtration efficiency (LEFS) of greater than about 50%, preferably greater than about 80%. Air permeability and filtration efficiency are measured according to ASTM D737-96 and ASTM F1215-89, respectively.

### Interior Fabric Layer

Referring to Figure 2, an optional interior fabric layer 216 (interior comfort layer or skin contact layer) can be included with a PTFE membrane 210 and an outer shell 212, as shown in a second embodiment of a multilayer fabric 200. The interior fabric layer 216 can comprise the same or a different material as the material used for the outer shell 212. The interior fabric layer 216 can be laminated to the PTFE membrane 210 with a discontinuous adhesive 218. In multilayer fabrics that include discontinuous adhesive between the PTFE membrane and outer shell, the discontinuous adhesive between the PTFE membrane and the interior fabric layer is a second discontinuous adhesive. Outer shell 212 is adhered to a PTFE membrane 210 with a discontinuous adhesive 214 similar to discontinuous adhesive 114 of Figure 1.

Typically, the interior fabric layer is a light fabric having a weight of about 0.3 oz/ sq yd. to about 6 oz/ sq. yd., preferably about 0.3 to about 2 oz./sq. yd. Both woven and non-woven (including knit) fabrics can be used, however, a preferred fabric is a light knit fabric. For example, the interior fabric layer can be, for example, cotton, nylon, polyester, polyethylene, polypropylene, acrylic fibers, PVC fibers, and blends of such materials, or any other fabric or blend of fabrics. Such fibers can be woven into a fabric and can have a patterned or dyed appearance. The interior fabric layer may be in contact with the wearer's skin when used as an overgarment or undergarment and can be made from a material that provides comfort to the wearer.

Typically, the interior fabric layer has a defined air permeability of about 0.1 to about 200, preferably about 20 to about 200. Air permeability is measured according to ASTM D737-96.

In applications that utilize the multilayer fabric as an undergarment, the interior fabric layer is next to and in contact with a wearer's skin and is typically made from a comfortable material such as tricot knit nylon. If the multilayer fabric is used as an overgarment, the interior fabric layer may be still be in contact with portions of the wearer's skin and, in those applications, a comfortable material is typically used.

In other embodiments of a multilayer fabric, such as multilayer fabric 300, shown in Figure 3, the discontinuous adhesive, such as discontinuous adhesive 214 of Figure 2, between outer shell 312 and PTFE membrane 310 can be eliminated. Alternatively, the layers can be sewn together. Discontinuous adhesive 318 can optionally be included to laminate the interior fabric layer 316 to the PTFE membrane 310, but also can be eliminated.

Referring to Figure 4, interior fabric layer 416 can include an optional reactive layer 420 including small particulates 426. Reactive layer 420 is described below. The reactive layer 420 is typically disposed between an inner layer 422 and an outer layer 424 of interior fabric layer 416. This three-layer construction forms the interior fabric layer 416, which is optionally adhered to PTFE membrane 410 with a discontinuous adhesive 418 similar to discontinuous adhesives 218, 318 of Figures 2 and 3.

Outer layer 424 is optional and can be any woven or non-woven cover that retains the reactive layer 420. Alternatively, the PTFE membrane 410 can substitute for outer layer 424. Figure 4 shows a discontinuous adhesive 428 that adheres particles of the reactive layer 420 to inner layer 422. Alternatively, the reactive layer can be disposed between the inner layer and outer layer or the inner layer and PTFE membrane without the use of an adhesive or adhered directly to PTFE membrane 410 or outer layer 424.

### Reactive Layer

Referring to Figure 4, an optional reactive layer 420 can be used in the laminated fabric 400. Reactive layers can be used to absorb, adsorb, or react with chemical or biological agents. Reactive layer 420 of the invention typically includes a finely divided activated carbon material dispersed, adhered to or embedded into a woven or non-woven material of the laminate, although other materials can be used in the reactive layer. The reactive layer 420 can be formed from the individualized particles of material such as particulates 426 of Figure 4. Other chemically reactive layers might include enzymes, catalysts, ion exchange materials, zeolites, etc.

Preferred reactive agents used in the invention include activated carbon and molecular sieve zeolite materials. The reactive material is more preferably an activated small divided carbon particulate. Such a particulate can have a grain size typically ranging from about 0.1 to 1 mm, preferably averaging about 0.2 to 0.4 mm. Activated carbon in other forms can be used depending on the desired characteristics of the multilayer fabric.

The activated carbon adsorbent can be combined with other absorbing or adsorbing organic or inorganic reagents for use in the laminate of the invention. Such materials can include sodium, potassium, calcium and other salts of bicarbonate, carbonate, hydrogen phosphate, dihydrogen phosphate, phosphate, sulfate, sulfite, ascorbic acid, boric acid, citric acid, small particle ion exchange resins and other materials that can be used to act as a barrier to the passage of hazardous vapors or gases. Active carbon can be prepared in a known manner from suitable organic materials.

The reactive layer can be formed on a woven or non-woven fabric or web. A non-woven web useful as a carrier for the reactive material can include spun bond webs, carded bonded webs, webs comprising fabrics or fibers having a fiber diameter that can comprise about 1 to 500 microns, preferably about 10 to about 200 microns.

If the reactive layer is adhered to a supporting material, the applied adhesive should cover about 20 to 50 %, preferably 20 to 35 %, of the surface of the supporting material. This partial application of the adhesive can be achieved by applying the adhesive only to the prominences of a fabric serving as a textile support material. Alternatively, a printed pattern can be distributed on the supporting material in the form of dots or lines. By the choice of the pattern it is possible to create a geometry that provides for absorption/adsorption, and taken into account characteristics of air permeability, which relate to the surface area of supporting material not covered in adhesive. Typically, the amount of adhesive applied is constant and uniform over the entire width of the supporting material. The pattern of the adhesive has a thickness of about 0.1 mm to about 0.4 mm and a diameter or width of about 0.1 mm to 1 mm, preferably about 0.3 mm to about 0.6 mm. The adhesive is best applied in dot form and the dots of adhesive are of hemispherical or conical shape.

A layer of material which has both adsorbents and suitable enzymes can be especially appropriate for protection against chemical and/or biological warfare agents. Enzymes can be used to decompose harmful gases such as mustard gas and nerve poisons and may deactivate biological agents.

Enzymes can be applied to supporting materials in the same manner in which the reactive layer is applied, ensuring that the components of the adhesive do not damage the membranes or the enzyme itself and avoiding the use of elevated temperatures during the manufacturing process. In some multilayer materials, the adsorbent is applied to a supporting layer and then the encapsulated gel spheres containing the enzyme are applied to the untreated side of the supporting layer. Additionally, enzymes or other active chemistry can cover the PTFE membrane with the multilayer fabric retaining an air permeability above 1.

### Adhesives

The adhesive used to laminate layers of material or particles to other layers of material can be either a polyurethane hot melt adhesive or a solvent based polyurethane adhesive. Examples of holt melt adhesives include, but are not limited to, TYFORCE H-1041, NH-122A, NH-300. TYFORCE adhesive can be obtained from Dainippon Ink & Chemicals, Inc. (Japan). Another example is TACKTILE hot melt adhesive manufactured by H.B. Fuller with grades S12/4, S12/3, and 9136 providing acceptable bond strength. Hot melt polyurethane adhesives are typically applied to a material as a discontinuous dot pattern.

### Other Fabric Treatments and Materials

Fabrics can optionally be treated with silicones, fluorocarbons, and other water repellents, which usually allow evaporation of perspiration but are only marginally waterproof; they allow water to leak through them under very low pressures, and usually leak spontaneously when rubbed or mechanically flexed. The outer shell can be treated to shed large droplets or aerosols of rain and/or chemical and biological warfare agents. For example, the shell fabric may be treated with a fluorocarbon treatment such as Quarpel and have a repellency rating of 100, 100, 90 per AATCC 22 (Spray rating)(ISO 4920).

The fabric can also be constructed to be flame retardant. For example, commercially available flame retardant adhesives can be used with fabrics made from fire retardant fibers such as meta-aramids, para-aramids, polybenzimidazole, and various blends of these types of fibers. Fire retardant fabrics can include, for example, Nomex, Kevlar, and PBI.

### EXAMPLES

Several fabric samples were tested for filtration efficiency (LEFS) according to ASTM F1215-89 using 0.8 micron polystyrene latex spheres at an air velocity of 20 feet per minute and a Frasier air permeability measured in cubic feet per minute (fpm) according to ASTM D737-96. Pore size is measured using ASTM F316-86.

### EXAMPLE 1

| **Nylon-Cotton Shell Fabric (6 oz./sq. yd)** | | |
|---|---|---|
| **Sample** | **Filtration Efficiency (%)** | **Frasier Air Permeability (fpm)** |
| 1 | 39.44 | 7.25 |
| 2 | 38.26 | 7.10 |
| 3 | 37.39 | 6.94 |
| 4 | 38.44 | 6.93 |
| 5 | 38.69 | 7.02 |

| **PTFE Membrane (2-3 micron pore size)** | | |
|---|---|---|
| **Sample** | **Filtration Efficiency (%)** | **Frasier Air Permeability (fpm)** |
| 6 | 88.27 | 61.2 |
| 7 | 88.68 | 60.2 |
| 8 | 83.81 | 77.4 |
| 9 | 88.11 | 77.8 |
| 10 | 88.47 | 70.6 |

| **Nylon Cotton Shell Fabric (6 oz./sq. yd) Adhered to PTFE Membrane (2-3 micron pore size)** | | |
|---|---|---|
| **Sample** | **Filtration Efficiency (%)** | **Frasier Air Permeability (fpm)** |
| 11 | 98.79 | 5.30 |
| 12 | 98.67 | 5.39 |
| 13 | 97.39 | 5.59 |
| 14 | 98.33 | 5.49 |
| 15 | 98.14 | 5.86 |
| 16 | 97.77 | 6.07 |
| 17 | 98.28 | 5.94 |
| 18 | 98.52 | 5.97 |
| 19 | 98.92 | 5.44 |
| 20 | 98.86 | 5.40 |
| 21 | 98.19 | 5.86 |
| 22 | 98.06 | 5.72 |
| 23 | 97.48 | 5.57 |

Separate samples of material were used for the LEFS and Frasier permeability tests conducted on the Camouflage Woven Shell Fabric having a weight of 6 oz/sq yd. Separate samples of material were used for the LEFS and Frasier Permeability tests conducted on the PTFE Membrane, which has a pore size of about 2 to 3 microns and is available from Donaldson Company Inc. The same sample of material was used for the LEFS and Frasier Permeability tests conducted on the Camouflage Woven Shell Fabric/PTFE Membrane multilayer fabric. The Camouflage Woven Shell Fabric was adhered to the PTFE Membrane with a discontinuous dot layer of H.B. Fuller S12/4 hot melt polyurethane adhesive.
Samples for the multilayer Shell/PTFE Membrane fabric testing were obtained from across the width of a 59.5 inch wide roll of multilayer fabric.

### EXAMPLE 2

| **Nylon Ripstop Shell Fabric (1.5 oz./sq. yd.)** | | |
|---|---|---|
| **Sample** | **Filtration Efficiency (%)** | **Frasier Air Permeability (fpm)** |
| 1 | 6.74 | 15.700 |
| 2 | 8.76 | 18.900 |
| 3 | 7.58 | 16.600 |

| **PTFE Membrane** | | |
|---|---|---|
| **Sample** | **Filtration Efficiency (%)** | **Frasier Air Permeability (fpm)** |
| 4 | 100.00 | 0.653 |
| 5 | 99.99 | 0.608 |
| 6 | 99.99 | 0.682 |

| **Nylon Ripstop Shell Fabric (1.5 oz/sq. yd) Adhered to PTFE Membrane** | | |
|---|---|---|
| **Sample** | **Filtration Efficiency (%)** | **Frasier Air Permeability (fpm)** |
| 7 | 99.93 | 0.370 |
| 8 | 99.94 | 0.333 |
| 9 | 99.91 | 0.462 |

### EXAMPLE 3

One example of a flame retardant fabric includes a PTFE membrane adhered to a 4.5 OSY Nomex/Kevlar (95/5) shell available from Springs Industries using a discontinuous adhesive S12/4 from H.B. Fuller with halogen free fire retardant additives. Alternatively, the PTFE membrane can be adhered to a 1.7 OSY Nomex/Kevlar (95/5) warp knit available from SSM Industries.

The above specification, examples and data provide a complete description of the manufacture and use of the composition of the invention. Since many embodiments of the invention can be made without departing from the spirit and scope of the invention, the invention resides in the claims hereinafter appended.

## Claims

1. An aerosol barrier fabric comprising:
(a) a PTFE membrane;
(b) an outer shell protecting the PTFE membrane; and
(c) the aerosol barrier fabric having an air permeability greater than about 1 fpm.

2. The fabric of claim 1, wherein the air permeability of the fabric is between about 1 and 100 fpm.

3. The fabric of claim 1, wherein the air permeability of the fabric is between about 2 and 50 fpm.

4. The fabric of claim 1, wherein the air permeability of the PTFE membrane is between about 5 and 100 fpm.

5. The fabric of claim 1, further comprising a discontinuous adhesive disposed between the PTFE membrane and outer shell applied to allow air permeability.

6. The fabric of claim 5, wherein the discontinuous adhesive covers about 10 to 50 percent of the PTFE membrane.

7. The fabric of claim 1, further comprising an inner comfort layer.

8. The fabric of claim 7, further comprising a discontinuous adhesive adhering the PTFE membrane to the inner comfort layer.

9. The fabric of claim 8, wherein the discontinuous adhesive covers about 10 to 50 percent of the PTFE membrane.

10. The fabric of claim 1, further comprising a reactive layer to remove harmful agents.

11. The fabric of claim 10, wherein the harmful agent is a gas phase chemical.

12. The fabric of claim 10, further comprising a discontinuous adhesive adhering the PTFE membrane to the reactive layer.

13. The fabric of claim 12, wherein the discontinuous adhesive covers about 10 to 50 percent of the PTFE membrane.

14. The fabric of claim 1, wherein the outer shell at least partially comprises fire retardant fibers.

15. The fabric of claim 1, wherein the interior comfort layer at least partially comprises fire retardant fibers.

16. A multilayer fabric comprising:
(a) a PTFE membrane;
(b) an outer shell protecting the PTFE membrane; and
(c) an inner layer; and
(d) a reactive layer between the inner layer and the PTFE membrane.

17. The fabric of claim 16, wherein the fabric has an air permeability of greater than 1 fpm.

18. The fabric of claim 16, wherein the reactive layer comprises activated carbon.

19. An aerosol barrier fabric comprising:
(a) an outer shell;
(b) a PTFE membrane adhesively secured to the outer shell with a discontinuous adhesive; and
(c) an interior fabric layer comprising:
(1) an inner layer;
(2) an outer layer; and
(3) a reactive layer disposed between the inner layer and the outer layer.

20. The aerosol barrier fabric of claim 19, further comprising a second discontinuous adhesive securing the interior fabric layer to the PTFE membrane.

21. A multilayer fabric comprising:
(a) an interior comfort layer;
(b) a reactive layer; and
(c) a bilayer structure comprising a PTFE membrane adhesively secured to an outer shell with a discontinuous adhesive.

22. An aerosol barrier protective fabric comprising:
(a) a PTFE membrane layer, wherein the pores of the PTFE membrane are sized to filter aerosols; and
(b) an outer shell protecting the PTFE membrane.

23. The fabric of claim 22, wherein the pores of the PTFE membrane are greater than about 1 micron.

24. The fabric of claim 22, wherein the pores of the PTFE membrane are between about 2 to 3 microns.

25. An aerosol barrier protective undergarment fabric comprising:
(a) a PTFE membrane layer, wherein the pores of the PTFE membrane are sized to filter aerosols; and
(b) an inner comfort layer protecting the PTFE membrane.

26. The fabric of claim 25, wherein the pores of the PTFE membrane are greater than about 1 micron.

27. The fabric of claim 25, wherein the pores of the PTFE membrane are between about 2 to 3 microns.

28. The fabric of claim 25 wherein the fabric is adapted to be worn on the body and covered by an exterior layer.
